# EUROPÄISCHE PATENTSCHRIFT

(11) **EP 0 638 963 B1**
(45) Veröffentlichungstag und Bekanntmachung des Hinweises auf die Patenterteilung: **05.03.1997**
(21) Anmeldenummer: 94110714.6
(22) Anmeldetag: 09.07.1994
(51) Int. Cl.: H01R 13/453, F21S 9/02, F21V 23/06

(54) **Aufnahmebehälter für wenigstens eine Batterie**
Housing for containing at least one battery
Boîtier destiné à contenir au moins une pile

(30) Priorität: 16.07.1993 DE 4323891
(43) Veröffentlichungstag der Anmeldung: 15.02.1995
(73) Patentinhaber: CEAG Sicherheitstechnik GmbH, 59494 Soest (DE)
(72) Erfinder: Ploeger, Cornelius, D-58730 Fröndenberg (DE)
(74) Vertreter: Grünecker, Kinkeldey, Stockmair & Schwanhäusser Anwaltssozietät

(56) Entgegenhaltungen:
- EP-A- 0 260 609
- DE-A- 3 133 986
- GB-A- 586 039

## Beschreibung

Die Erfindung betrifft einen an einem Gehäuse eines elektrischen Gerätes, insbesonderer einer Leuchte, befestigbarer Aufnahmebehälter für wenigstens eine Batterie zur Stromversorgung des Gerätes, nach dem Oberbegriff des Anspruches 1.

Bestimmte elektrische Geräte, beispielsweise Langfeldleuchtstofflampen, werden normalerweise im Netzbetrieb betrieben. Batterien, die bei Netzausfall die Stromversorgung der Leuchte übernehmen, sind in einer Zentrale angeordnet und werden bei Bedarf zugeschaltet. Bei tragbaren Leuchten allerdings ist es üblich, die Batterien innerhalb des Gerätes in einem eigenen Batteriekasten unterzubringen.

Aus der EP-A-0 260 609 ist eine elektrische kontaktier-Vorrichtung, wobei die Abdeckung eines Steckers beim Auflegen des Handgerätes auf eine Ladegerät automatisch geöffnet wird, bekannt.

Aufgabe der Erfindung ist es, einen Aufnahmebehälter der eingangs genannten Art zu schaffen, der für stationäre Geräte, insbesondere für eine Langfeldleuchte, die darüberhinaus auch im explosionsgefährdeten oder Schlagwettergefährdeten Bereich betrieben wird, zu schaffen.

Diese Aufgabe wird erfindungsgemäß dadurch gelöst, daß der Behälter an einer Seitenwand sacklochartige, zur Außenseite hin offene Vertiefungen aufweist, in denen sich die Anschlußelemente befinden, und daß im Bereich der Vertiefung eine Abdeckplatte vorgesehen ist, die entgegen der Kraft einer Federanordnung verschiebbar ist, wobei sie in einer ersten Stellung die Vertiefungen abdeckt und in einer zweiten Stellung freigibt.

Eine weitere Ausgestaltung der Erfindung kann darin bestehen, daß am Gerät ein Anschlag vorgesehen ist, gegen den die Abdeckplatte während des Befestigens des Batteriebehälters am Gerät anschlägt und der die Abdeckplatte in die zweite Stellung verschiebt.

Mit der erfindungsgemäßen Ausgestaltung wird ein Behälter geschaffen, dessen Anschlußelemente im herausgenommenen Zustand, wenn also der Aufnahmebehälter nicht am Gerät montiert ist, abgedeckt ist, wogegen im montierten Zustand die Abdeckplatte von dem Anschlag in die zweite Stellung verschoben ist. Dadurch sind die Anschlußelemente immer abgedeckt, so daß eine ungewollte Verbindung der beiden Elemente und ein dadurch herbeigeführter ungewollter Kurzschluß vermieden sind.

Die Führung der Abdeckplatte erfolgt gemäß kennzeichnenden Merkmalen des Anspruches 3 durch an der Abdeckplatte angeordnete Vorsprünge, die in Führungsausnehmungen am Gerät eingreifen und dadurch die Abdeckplatte beim Verschieben führen.

Die Federanordnung, die die Abdeckplatte immer in die Stellung beaufschlagt, in der die Anschlußelemente abgedeckt sind, befindet sich zwischen den Vorsprüngen; wenn die Feder eine Schraubendruckfeder ist, liegt das eine Ende der Feder an einer Wandung an der Abdeckplatte und das andere Ende an einer Wandung an dem Gerät an.

Eine besonders vorteilhafte Ausgestaltung der Erfindung kann dahin gehen, daß die Abdeckplatte wenigstens eine Nase auf der den Vorsprüngen entgegengesetzten Seite aufweist. Für den Fall, daß die Feder beschädigt ist und die Abdeckplatte auch nach Herausnehmen aus dem Gerät in der zweiten Stellung verbleibt und aus welchen Gründen auch immer beispielsweise auf den Boden fällt, sorgt die Nase dafür, daß die Anschlußelemente, die sich innerhalb der Vertiefungen befinden, in jedem Fall einen sicheren Abstand vom Boden oder von einer elektrisch leitenden Fläche einnehmen können.

Die Anschlußelemente sind in bevorzugter Weise am Batteriebehälter als Steckerstifte ausgebildet, wogegen am Gerät Buchsenelemente vorgesehen sind.

Damit die Anordnung auch in explosionsgefährdetem Bereich verwendet werden kann, d. h. der Aufnahmebehälter mit den Batterien auch in diesem explosionsgefährdeten Bereich ausgetauscht werden kann, sind die Buchsenelemente von einer diese überragenden Hülse aus isolierendem Material umgeben, dergestalt, daß vor dem Kontaktieren der Steckerstifte mit den Buchsenelementen zwischen der Hülse und dem Steckerstift ein den Ex- bzw. Schlagwettervorschriften entsprechender druckfester Luftspalt gebildet ist.

Es ist natürlich selbstverständlich, daß die Anschlußelemente am Batteriebehälter auch als Buchsenelemente und die Anschlußelemente am Gerät auch als Steckerstifte ausgebildet sein können.

Eine weitere vorteilhafte Ausgestaltung der Erfindung kann dahin gehen, daß der den Boden der Vertiefung durchgreifende Steckerstift am Boden auf der Behälterinnenseite mittels einer Leiste und auf der Behälteraußenseite oder Bodenseite mittels eines Federelementes fixiert ist.

Dabei ist das Federelement in bevorzugter Weise als etwa tellerförmiger Ring ausgebildet, dessen Innenrand Federfinger aufweist, die in eine umlaufende Rille am Steckerstift eingeschnappt sind und den Steckerstift nach außen zu drücken suchen und dadurch die Leiste gegen einen Rücksprung an der Behälterinnenseite drücken.

Im Behälterinneren kann am Steckerstift in bevorzugter Weise ein Kabelschuh befestigt sein, an dem ein Verbindungsleiter zu der wenigstens einen Batterie anschließbar ist.

Der Steckerstift besitzt in bevorzugter Weise an seinem freien Ende einen Bereich verringerten Durchmessers, der in das Buchsenelement eingreift. Dadurch wird erreicht, daß der Bereich, der mit der Hülse den Luftspalt bilden soll, durch das Buchsenelement nicht beschädigt wird.

Anhand der Zeichnung, in der ein Ausführungsbeispiel der Erfindung dargestellt ist, sollen die Erfindung sowie nähere Ausgestaltungen und Verbesserungen sowie weitere Vorteile der Erfindung näher erläutert und beschrieben werden.

Es zeigen:
- Figur 1: eine Aufsicht auf den Aufnahmebehälter, rechts der Mittellinie teilweise geschnitten,
- Figur 2: eine Schnittansicht gemäß der Schnittlinie II-II der Figur 1,
- Figur 3: eine Schnittansicht gemäß der Schnittlinie III-III der Figur 1,
- Figur 4: eine Schnittansicht im Bereich einer Anschlußstelle des Batteriebehälters an einer Langfeldleuchte.

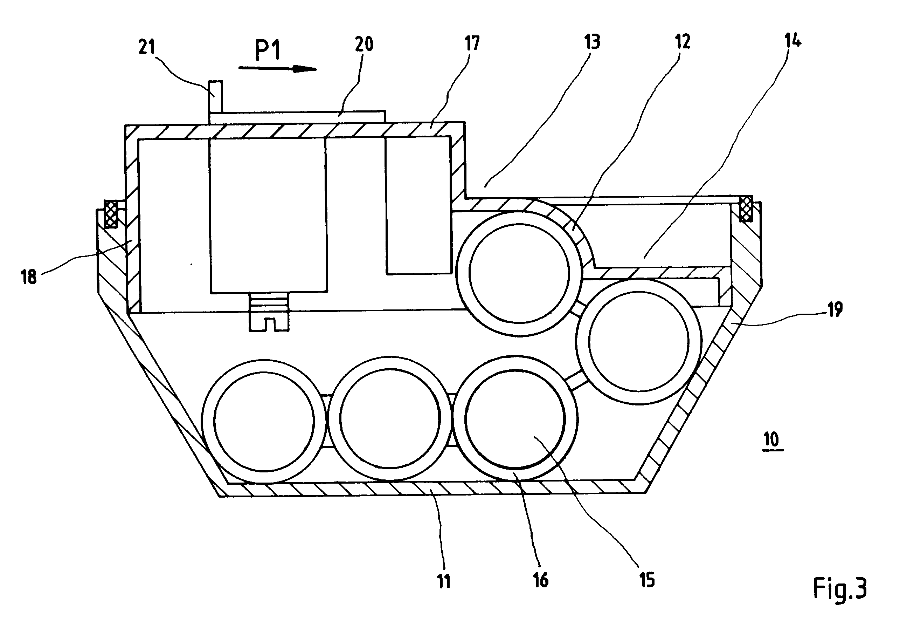

Es sei Bezug genommen auf die Figur 3.

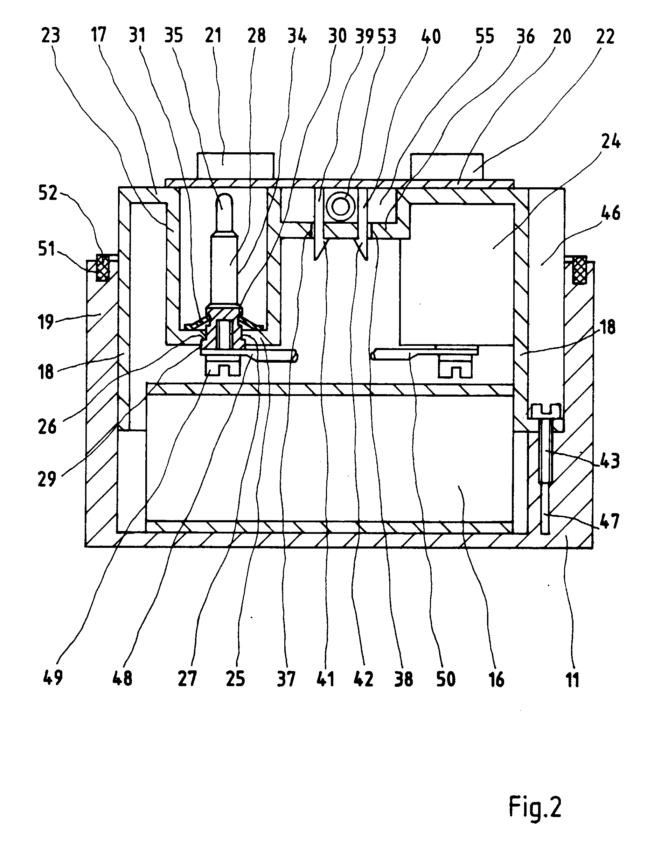

Ein Behälter 10 ist gebildet aus einem Behälterunterteil 11 und einem in den Behälterunterteil eingefügten Abdeckteil 12, der, wie ersichtlich, zwei Stufen 13 und 14 aufweist, die der Form eines aus mehreren Batterien 15 bestehenden Batteriepacks 16 angepaßt ist. Das Behälterteil 12 ist als Napfteil ausgebildet; es besitzt anschließend an die Stufen 13 und 14 einen ebenen Bodenbereich 17 und eine umlaufende Wand 18, die wie aus Figur 2 ersichtlich, von der Wandung 19 des Unterteils 11 umfaßt wird. Auf der Oberfläche des ebenen Bereiches 17 befindet sich eine Abdeckplatte 20, an deren in der Zeichnung links dargestellten bzw. befindlichen Ende zwei Nasen 21 und 22 angeformt sind.

Es nun Bezug genommen auf die Figur 2.

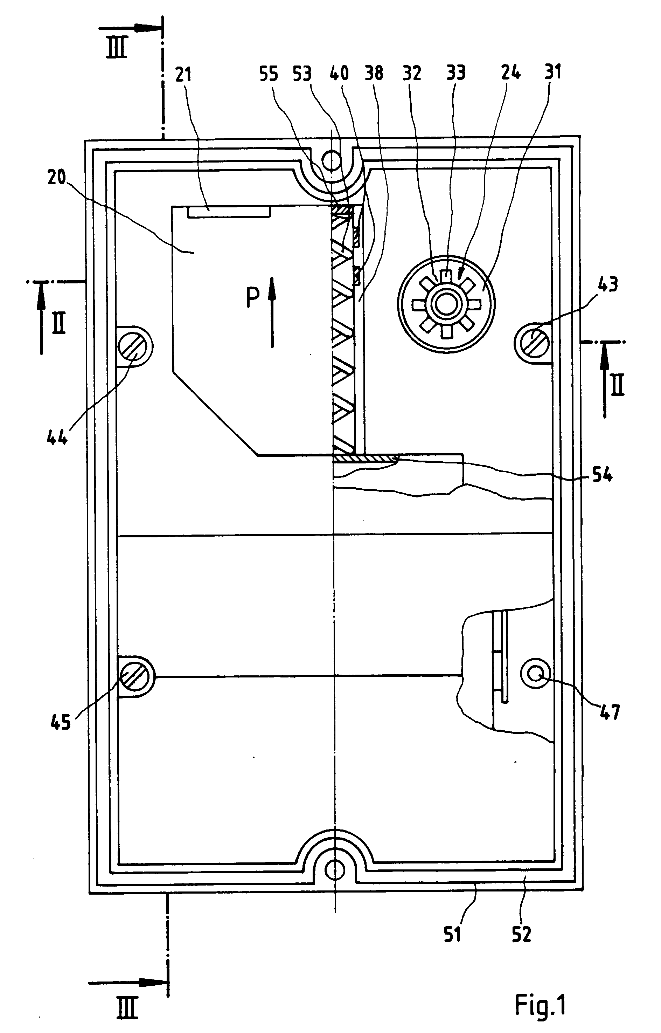

In dem ebenen Bereich 17 befinden sich zwei nebeneinander liegende Vertiefungen 23 und 24, die eine Zylinderform aufweisen und an ihrem Bodenteil (nur bei der Vertiefung 23 dargestellt) 25 eine mit einer Stufe 26 versehene Öffnung 27 aufweisen, durch die ein an die Öffnung 27 angepaßter Steckerstift 28 hindurchgreift; der Steckerstift 28 besitzt eine umlaufende Leiste 29, die gegen die Stufung 26 anschlägt. Der Steckerstift besitzt im Bereich der Vertiefung ein außerhalb der Bodenwand 25 befindliche umlaufende Rille 30, in die Sprengringfeder 31 eingreift, die eine kegel- oder tellerförmige Form besitzt. Wie aus der Figur 1 ersichtlich, die einen Einblick in die Vertiefung 24 gestattet, besitzt der Ring 31 an seinem nenradius mehrere Finger 32, die durch Öffnungen 33 voneinander getrennt sind; diese Finger 32 wirken als Federelemente und drücken die Leiste 29 gegen die Stufung 26, da die Finger 32 an die entsprechende Wand der Rille 30 des Steckerstiftes 28 andrücken.

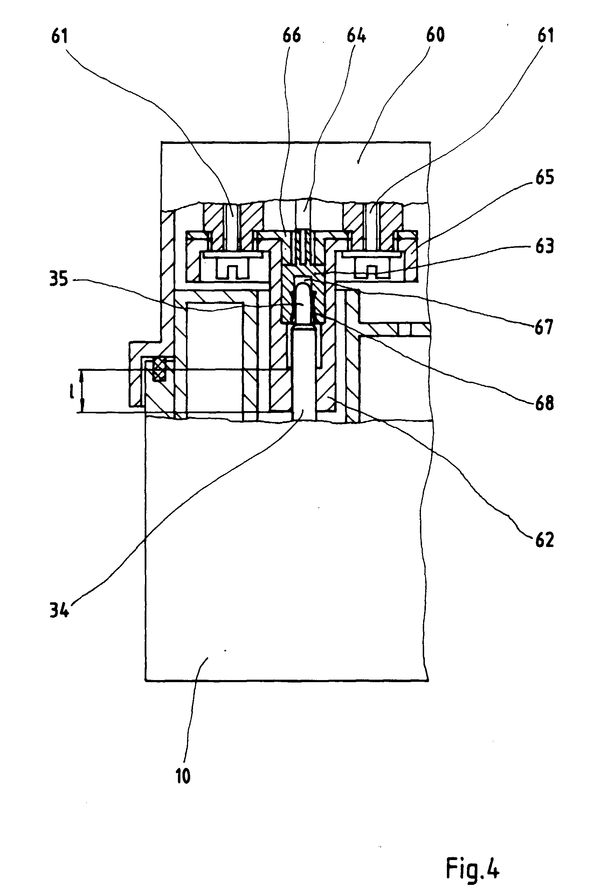

Der Steckerstift 28 besitzt in dem Bereich außerhalb des Ringes 31 einen Abschnitt 34 mit größerem und einen Abschnitt 35 mit kleinerem Durchmesser; der Grund für diese beiden Abschnitte 34 und 35 wird anhand der Figur 4 erläutert.

Zwischen den beiden Vertiefungen 23 und 24 befindet sich eine in Abstand zu dem Bereich 17 und parallel dazu verlaufende Zwischenwand 36, die zwei Schlitze 37 und 38 aufweist, in die Vorsprünge 39 und 40 an der Abdeckplatte 20 eingreifen und durch die die Abdeckplatte geführt ist. Man erkennt in der Figur 1 den Schlitz 38, in den ein Vorsprungpaar 40 eingreift und darin geführt ist. Der Vorsprung 40 ist in Figur 2 als ein Vorsprung gezeichnet; tatsächlich sind zwei Vorsprünge hintereinander vorhanden, die zu einem Verdrehschutz für die Abdeckplatte 20 dienen. Das freie Ende der Vorsprünge 39 und 40 hintergreift mit Nasen 41 und 42 die Zwischenwand 36, so daß ein Herausnehmen und Abheben der Abdeckplatte verhindert ist.

Das Teil 12 ist mit mehreren Schrauben 43 bis 45 am Gehäuseunterteil 11 festgeschraubt, wobei, wie aus Figur 2 ersichtlich ist, kanalförmige Rillen 46 vorgesehen sind, durch die die Schrauben 43 (siehe Figur 2), 44 und 45 eingeführt werden können; im Unterteil 11 befinden sich Löcher 47, in die die Schrauben 43 bis 45 eingeschraubt werden können. Die Figur 1 ein solches Gewindeloch 47.

Am freien inneren Ende des Steckerstiftes 28 ist ein Kabelschuh 48 mit einer Schraube 49 festgeschraubt; es ist auch bei dem in der Vertiefung 24 vorhandenen Steckerstift der Fall. Man erkennt diesen Kabelschuh 50 in der Figur 2.

Das Unterteil 11 besitzt an seinem freien Flanschrand eine umlaufende Rille 51, in die eine Dichtung 52 eingesetzt ist, die mit einer entsprechenden Dichtung an einem nicht näher dargestellten Gerät zusammenwirkt.

Zwischen den beiden Vorsprüngen bzw. Vorsprungpaare 39 und 40 befindet sich eine Schraubendruckfeder 53, die mit ihrem einen Ende an einer dem Abdeckteil 12 zugeordneten Wandung 54 und mit ihrem anderen Ende an einer der Abdeckplatte 20 angeformten Wandung 55 zum Anliegen kommt; dadurch wird die Abdeckplatte 20 von der Feder 53 dauernd in Pfeilrichtung P beaufschlagt. Die Wandung 55 befindet sich, wie aus Figur 2 ersichtlich, in dem Bereich, der von der Zwischenwandung 36 und den Vertiefungen 23 und 24 begrenzt ist.

Die Figur 4 zeigt die Montage des Batteriebehälters 10 an einer Leuchte 60. An der Leuchte 60 ist mittels Schrauben 61 eine Hülse 62 festgeschraubt - für jeden Steckerstift je eine, insgesamt also zwei - in der eine Anschlußbuchse 63 aufgenommen ist. An der Anschlußbuchse 63 schließt ein Kabel 64 an, welches zu einer nicht näher dargestellten Leuchtstofflampe führt. Zu der Hülse 62 mit einem Hülsenflansch 65 gehört ein Fixierstück 66, welches ins Innere der Hülse 62 zum Teil eingreift und mittels der Schrauben 61 an der Leuchte 60 fixiert ist. Das Buchsenelement 63 befindet sich zwischen dem Fixierstück 66 und der Hülse 62. Innerhalb des Buchsenelementes 63 ist eine sacklochartige Öffnung 67 vorgesehen, in der sog. Multilamellenkontakte 68 eingesetzt sind. Der Bereich 35 des Steckerstiftes mit dem verringerten Querschnitt greift in die Buchse bzw. in das Sackloch 67 und kontaktiert mit den Multilamellenkontakten 68. Das freie Ende der Hülse 62 umfaßt auf einer Länge l den Abschnitt 34 des Steckerstiftes dergestalt, daß zwischen der Innenfläche der Hülse 62 und der Außenfläche des Steckerstiftes 34 ein durchschlagsicherer Luftspalt gebildet ist und zwar bevor eine elektrisch leitende Kontaktierung der Buchse 68 mit dem Steckerstift erfolgt ist.

Die Nasen 21 und 22 wirken mit einem an der Leuchte vorhandenen, in der Zeichnung nicht dargestellten Anschlag zusammen, dergestalt, daß dieser Anschlag die Abdeckplatte 20 in Pfeilrichtung P₁ entgegen der Kraft der Feder zurückschiebt; dadurch werden die Steckerstifte freigelegt und können mit den Buchsenelementen kontaktiert werden. Die Montage bzw. der Einbau des Batteriebehälters hat dann so zu erfolgen, daß die Nasen am Anschlag 21 anliegen.

## Patentansprüche

1. An einem Gehäuse eines elektrischen Gerätes, insbesondere einer Langfeldleuchte, befestigbarer Aufnahmebehälter für wenigstens eine Batterie zur Stromversorgung des Gerätes, mit einem Behälterunterteil und einem -oberteil, die miteinander dicht verbunden sind, und mit Anschlußelementen, die mit korrespondierenden Anschlußelementen des Gerätes beim Befestigen verbindbar sind, dadurch gekennzeichnet, daß der Behälter (10) an einer Seitenwand sacklochartige Vertiefungen (23, 24), die zur Außenseite hin offen sind, aufweist, in denen sich Anschlußelemente (28) befinden, und daß im Bereich der Vertiefungen (23, 24) eine Abdeckplatte (20) vorgesehen ist, die entgegen der Kraft einer Federanordnung (53) verschiebbar ist, wobei sie in einer ersten Stellung die Vertiefungen (23, 24) abdeckt und in einer zweiten Stellung freigibt.

2. Aufnahmebehälter nach Anspruch 1, dadurch gekennzeichnet, daß am Gerät ein Anschlag vorgesehen ist, gegen den die Abdeckplatte (20) während des Befestigens des Batteriebehälters (10) am Gerät anschlägt und der die Abdeckplatte (20) in die zweite Stellung verschiebt.

3. Aufnahmebehälter nach einem der vorherigen Ansprüche, dadurch gekennzeichnet, daß senkrecht an der Abdeckplatte (20) und in Abstand zueinander zwei Vorsprünge (39, 40) oder zwei Vorsprungpaare (39, 40) angeformt sind, die in Führungsausnehmungen (37, 38) am Behälter (10) eingreifen und dadurch die Abdeckplatte (20) beim Verschieben führen.

4. Aufnahmebehälter nach einem der vorherigen Ansprüche, dadurch gekennzeichnet, daß zwischen den Vorsprüngen oder Vorsprungpaaren (39, 40) die Federanordnung (53) vorgesehen ist, deren eines Ende an einer Wandung (55) an der Abdeckplatte und deren anderes Ende an einer Wandung (54) am Behälter anliegen.

5. Aufnahmebehälter nach Anspruch 4, dadurch gekennzeichnet, daß die Feder eine Schraubendruckfeder ist.

6. Aufnahmebehälter nach einem der vorherigen Ansprüche, dadurch gekennzeichnet, daß die Abdeckplatte (20) wenigstens eine Nase (21, 22) auf der den Vorsprüngen (39, 40) entgegengesetzten Seite aufweist.

7. Aufnahmebehälter nach einem der vorherigen Ansprüche, dadurch gekennzeichnet, daß die Anschlußelemente am Batteriebehälter (10) Steckerstifte (28) oder Buchsenelemente sind, die in Buchsenelemente (63) oder Steckerstifte am Gerät einsteckbar sind.

8. Aufnahmebehälter nach Anspruch 7, dadurch gekennzeichnet, daß die Buchsenelemente (63) von einer diese überragenden Hülse (62) aus isolierendem Material umgeben sind, dergestalt, daß vor dem Kontaktieren der Steckerstifte (34) mit den Buchsenelementen (63) zwischen der Hülse und dem Steckerstift ein dem Ex- bzw. Schlagwettervorschriften entsprechender druckfester Luftspalt gebildet ist.

9. Aufnahmebehälter nach Anspruch 7, bei dem die Anschlußelemente Steckerstifte sind, dadurch gekennzeichnet, daß jeder der den Boden der Vertiefungen durchgreifende Steckerstifte (34) am Boden der Vertiefung (23, 24) auf der Behälterinnenseite mittels einer Leiste (29) und auf der Behälteraußenseite oder Bodenseite der Vertiefung mittels eines Federelementes (31) fixiert ist.

10. Aufnahmebehälter nach Anspruch 9, dadurch gekennzeichnet, daß das Federelement (31) als etwa tellerförmiger Ring ausgebildet ist, dessen Innenrand Federfinger (32) aufweist, die in eine umlaufende Rille (30) am Steckerstift (28) eingeschnappt sind und den Steckerstift (28) nach außen beaufschlagen und dadurch die Leiste (29) gegen einen Rücksprung (26) an der Behälterinnenseite drücken.

11. Aufnahmebehälter nach Anspruch 10, dadurch gekennzeichnet, daß im Behälterinneren an jedem Steckerstift (28) ein Kabelschuh (48, 50) befestigt ist, an dem ein Verbindungsleiter zu der wenigstens einen Batterie angeschlossen ist.

12. Aufnahmebehälter nach einem der vorherigen Ansprüche, dadurch gekennzeichnet, daß der Steckerstift (28) an seinem freien Ende einen Bereich (35) verringerten Durchmessers aufweist, der in das Buchsenelement (63) einfügbar ist.

## Claims

1. Receiving container capable of being fastened to a housing of an electric device, especially a Langfeld lamp, for at least one battery for supplying the power of the device, having a container lower part and a container upper part which are connected to one another in sealed manner and having connection elements which on fastening can be connected to corresponding connection elements of the device, characterised in that on a side wall the container (10) has cavities (23, 24) like blind-end bores open towards the outside, in which the connection elements (28) are located and that in the region of the cavities (23, 24) a cover plate (20) is provided which is displaceable against the force of a spring arrangement (53), wherein in a first position it covers the cavities (23, 24) and in a second position frees them.

2. Receiving container according to Claim 1, characterised in that provided on the device is a limit stop against which the cover plate (20) strikes during the fastening of the battery container (10) on the device and which displaces the cover plate (20) into the second position.

3. Receiving container according to one of the preceding claims, characterised in that formed vertically on the cover plate (20) and at a distance from one another are two projections (39, 40) or two pairs of projections (39, 40) which engage in guide recesses (37, 38) on the container (10) and by this means guide the cover plate (20) during displacement.

4. Receiving container according to one of the preceding claims, characterised in that between the projections or pairs of projections (39, 40) the spring arrangement (53) is provided, one end of which fits against a wall (55) on the cover plate and the other end of which fits against a wall (54) on the container.

5. Receiving container according to Claim 4, characterised in that the spring is a coiled compression spring.

6. Receiving container according to one of the preceding claims, characterised in that the cover plate (20) has at least one catch (21, 22) on the side opposite the projections (39, 40).

7. Receiving container according to one of the preceding claims, characterised in that the connection elements on the battery container (10) are plug pins (28) or socket elements which can be plugged into socket elements (63) or plug pins on the device.

8. Receiving container according to Claim 7, characterised in that the socket elements (63) are surrounded by a sleeve (62) made of insulating material projecting over the latter in such a way that before bringing the plug pins (34) into contact with the socket elements (63) a pressure resistant air gap in accordance with the explosion and firedamp regulations is formed between the sleeve and the plug pin.

9. Receiving container according to Claim 7, in which the connection elements are plug pins, characterised in that each of the plug pins (34) engaging through the bottom of the cavities is fixed at the bottom of the cavity (23, 24) on the inside of the container by means of a ridge (29) and on the outside of the container or bottom side of the cavity by means of a spring element (31).

10. Receiving container according to Claim 9, characterised in that the spring element (31) is constructed as an approximately plate-like ring the inner rim of which has spring fingers (32) which are snapped into a circular groove (30) on the plug pin (28) and act upon the plug pin towards the outside and by this means push the ridge (29) against a recess (26) on the inside of the container.

11. Receiving container according to Claim 10, characterised in that in the interior of the container on each plug pin (28) a cable lug (48, 50) is fastened, to which a connecting conductor to at least one battery is connected.

12. Receiving container according to one of the preceding claims, characterised in that at its free end the plug pin (28) has a region (35) of reduced diameter which can be fitted into the socket element (63).

## Revendications

1. Boîtier récepteur pour au moins une pile, pouvant être fixé sur le boîtier d'un appareil électrique, en particulier le boîtier d'un tube fluorescent allongé, destiné à assurer l'alimentation en courant de l'appareil, comprenant une partie inférieure du boîtier et une partie supérieure du boîtier, reliées de façon étanche l'une à l'autre, et comportant des éléments de branchement pouvant être reliés à des éléments de branchement correspondants de l'appareil lors du montage,
caractérisé en ce que le boîtier (10) comporte, dans sa paroi latérale, des renfoncements (23, 24) en forme de trous borgnes, qui sont ouverts vers l'extérieur, et dans lesquels se trouvent des éléments de raccordement (28), et en ce qu'une plaque de couverture (20) est prévue au niveau des renfoncements (23, 24) et peut être déplacée à l'encontre de la force d'un système à ressort (53), recouvrant les renfoncements (23, 24) dans une première position, et les découvrant dans une seconde position.

2. Boîtier récepteur selon la revendication 1, caractérisé en ce qu'une butée est prévue sur l'appareil, sur laquelle vient en appui la plaque de couverture (20) lors de l'installation du boîtier à piles (10) sur l'appareil, et qui repousse la plaque de couverture (20) dans la seconde position.

3. Boîtier récepteur selon l'une des revendications précédentes, caractérisé en ce que deux saillies (39, 40) ou deux paires de saillies (39, 40) sont conformées verticalement sur la plaque de couverture (20), et à une distance l'une de l'autre, qui s'engagent dans des évidements de guidage (37, 38) du boîtier et guident ainsi la plaque de couverture (20) pendant son déplacement.

4. Boîtier récepteur selon l'une des revendications précédentes, caractérisé en ce qu'un système à ressort (53) est prévu entre les saillies ou paires de saillies (39, 40), l'une des extrémités du système à ressort venant en appui sur une paroi (55) de la plaque de couverture, et son autre extrémité venant en appui sur une paroi (54) du boîtier.

5. Boîtier récepteur selon la revendication 4, caractérisé en que le ressort est un ressort de pression hélicoïdal.

6. Boîtier récepteur selon l'une des revendications précédentes, caractérisé en ce que la plaque de couverture (20) comporte au moins un nez (21, 22) aménagé sur le côté opposé aux saillies (39, 40).

7. Boîtier récepteur selon l'une des revendications précédentes, caractérisé en ce que les éléments de branchement du boîtier à piles (10) sont des fiches mâles (28) ou des éléments de fiches femelles, qui peuvent s'enficher dans/par-dessus des éléments de fiches femelles (63) ou fiches mâles de l'appareil.

8. Boîtier récepteur selon la revendication 7, caractérisé en ce que les éléments de fiches femelles (63) sont entourés par une douille (62) en une matière isolante, dépassant les fiches femelles, de manière telle qu'avant l'établissement du contact entre les fiches mâles (34) et les éléments de fiches femelles (63), une fente d'air conforme aux règlements Ex ou anti-grisou, résistant à la pression en conséquence, soit formée entre la douille et la fiche mâle.

9. Boîtier récepteur selon la revendication 7, dans lequel les éléments de branchement sont des fiches mâles, caractérisé en ce que chacune des fiches mâles (34) traversant le fond des renfoncements est fixée sur le fond des renfoncements (23, 24) au moyen d'une collerette (29) du côté intérieur du boîtier, et au moyen d'un élément ressort (31) du côté extérieur du boîtier ou du côté du fond du renfoncement.

10. Boîtier récepteur selon la revendication 9, caractérisé en ce que l'élément ressort (31) est configuré comme un anneau présentant à peu près une forme de cuvette, dont le bord intérieur comporte des doigts élastiques (32) qui s'enclenchent dans une rainure périphérique (30) ménagée dans la fiche mâle (28), et mettent sous précontrainte la fiche mâle (28) vers l'extérieur, forçant ainsi la collerette (29) contre un épaulement rentrant (26) ménagé dans la face intérieure du boîtier.

11. Boîtier récepteur selon la revendication 10, caractérisé en ce qu'une cosse à câble (48, 50) est fixée sur chacune des fiches femelles (28), à l'intérieur du boîtier, sur laqueIle est raccordé un conducteur de raccordement relié à ladite au moins une pile.

12. Boîtier récepteur selon l'une des revendications précédentes, caractérisé en ce que la fiche mâle (28) comporte, au niveau de son extrémité libre, une zone (35) de diamètre réduit, qui peut s'emboîter dans l'élément de fiche femelle (63).
